# EUROPÄISCHE PATENTSCHRIFT

(11) **EP 2 599 843 B1**
(45) Veröffentlichungstag und Bekanntmachung des Hinweises auf die Patenterteilung: **17.08.2016**
(21) Anmeldenummer: 12195157.8
(22) Anmeldetag: 30.11.2012
(51) Int. Cl.: C09D 127/12, C09D 161/00

(54) **PEK und/oder PEEK enthaltende Antihaftbeschichtung**
Non-stick coating comprising PEK and/or PEEK
Revêtement anti-adhésif contenant du PEK et/ou PEEK

(30) Priorität: 30.11.2011 DE 102011119731
(43) Veröffentlichungstag der Anmeldung: 05.06.2013
(73) Patentinhaber: Rhenotherm Kunststoffbeschichtungs GmbH, 47906 Kempen (DE)
(72) Erfinder: Eigenbrod, Volkmar, Dr., 47804 Krefeld (DE)
(74) Vertreter: Lenzing Gerber Stute

(56) Entgegenhaltungen:
- EP-A1- 0 100 889
- EP-A1- 1 885 812
- EP-A1- 1 985 746
- DE-A1- 10 252 142

## Beschreibung

Die Erfindung betrifft eine Antihaftbeschichtung für ein Substrat aus einem metallischen Werkstoff, Glas, Keramik, Steingut oder Emaille mit mindestens einer ersten, unmittelbar auf das Substrat aufgebrachten Schicht. Die Erfindung betrifft auch Werkstücke, die mit einer solchen Antihaftbeschichtung beschichtet sind.

Unter einer Antihaftbeschichtung ist im Rahmen der vorliegenden Erfindung eine Beschichtung zu verstehen, die so beschaffen ist, dass sie sich insbesondere für Bleche, Walzen oder andere Maschinenteile in der Lebensmittel-, Klebstoff-, Gummi- und/oder lackverarbeitenden Industrie besonders gut eignet. Gute Antihafteigenschaften sind besonders dort relevant, wo bestimmte Flächenbereiche die Eigenschaft aufweisen sollen, dass dort Klebstoff oder andere klebrige oder kleberbehaftete Materialien wie Etiketten, Klebebänder, Lebensmittel und andere anhaftende Produkte nicht haften.

Aus der US 6,596,380 B1 ist eine Antihaftbeschichtung bekannt. Es wird vorgeschlagen, zur Verbesserung der Haftung der Antihaftbeschichtung auf dem Substrat einen Dreischichtaufbau vorzusehen, der eine Unterschicht, eine Hauptschicht und eine Oberschicht aufweist. Die Unterschicht besteht zumindest aus 50 Gew.-% Polyetheretherketon (PEEK, oxy-1,4-phlenylene-oxy-1,4-phenylene-carbonyl-1,4 -phenylene) und ist frei von fluorhaltigen Polymeren. In der Hauptschicht sind neben Anteilen temperaturstabiler Polymere wie PEEK ebenfalls fluorhaltige Polymere enthalten. Die Oberschicht besteht im Wesentlichen aus fluorhaltigen Polymeren.

Aus der DE 600 07 853 T2 ist eine sehr ähnliche Antihaftbeschichtung mit einer Unterschicht, einer einen Fluorkunststoff enthaltenden Primärschicht und zumindest einer Deckschicht auf der Basis eines Fluorkunststoff bekannt, bei dem die Kratzbeständigkeit durch die Verwendung einer im Wesentlichen aus PEEK bestehenden Unterschicht verbessert ist. Die Unterschicht ist diskontinuierlich, bildet ein Gitter und besteht im Wesentlichen ausschließlich aus PEEK.

Außerdem ist aus der Patentschrift DE 10 2005 004 829 B4 ein Artikel mit einer Beschichtung bekannt, die mindestens eine oberste Deckschicht und eine darunter liegende Unterschicht aufweist. Beide Schichten weisen Hochleistungsthermoplaste, ausgewählt aus der Gruppe von Polyaryletherketonen, LCP, PEK, PEEK, PPS, und Mischungen derselben auf. Die Deckschicht umfasst darüber hinaus 20 - 30 % thermoplastische organische Fluorpolymere.

Eine Aufgabe der Erfindung besteht darin, eine Antihaftbeschichtung der eingangs genannten Art zur Verfügung zu stellen, die gegenüber dem Stand derTechnik eine verbesserte Kombination ihrer Eigenschaften hinsichtlich Kratzfestigkeit, Temperaturbeständigkeit, Wasserdampfdichtigkeit und Korrosionsbeständigkeit aufweist.

Diese Aufgabe wird bei einer Antihaftbeschichtung der eingangs genannten Art und einem damit beschichteten Werkstück gelöst durch eine erste, unmittelbar auf das Substrat aufzubringende Schicht, die aus mindestens 33 Gew.-% Polyetherketon und/oder Polyetheretherketon (PEEK), mindestens 33 Gew.% eines oder mehrerer Fluorpolymere und nicht mehr als 16% Gew. % Additiven besteht.

Die Besonderheit dieser Antihaftbeschichtung besteht darin, dass das PEK bzw. PEEK der ersten Schicht eine Matrixstruktur bildet, die sich zum Einen hervorragend mit dem Substrat verbindet und in der zum Anderen das bzw. die Fluorpolymere sowie etwaige Additive eingebettet sind. Das bzw. die Fluorpolymere binden sich daher nicht nur selbst an das Substrat an, sondern werden zusätzlich in der Matrixstruktur gehalten, so dass sie sehr fest mit dem Substrat verbunden sind. Im Ergebnis wird eine äußerst kratzfeste Struktur erzielt, die aufgrund des eingelagerten Fluorpolymers gute Antihafteigenschaften aufweist. Die Eigenschaftskombination aus hoher Kratzbeständigkeit und guten Antihafteigenschaften besteht auch bei vergleichsweise hohen Temperaturen, da das PEK bzw. PEEK eine gegenüber Fluorpolymeren deutlich bessere Temperaturbeständigkeit hat und das bzw. die Fluorpolymere auch noch bei Temperaturen von beispielsweise mehr als 260 °C in der Matrixstruktur festgehalten werden, bei denen sie ohne Matrixstruktur eine feste Verbindung zum Substrat verlieren würden.

Zur Beschichtung geeignete Substrate sind vor allem Materialien, die eine Sintertemperatur von 400°C und mehr ohne Oxidation oder Zersetzung überstehen, wie insbesondere metallische Substrate (beispielsweise Eisen, Stahl, Aluminium und deren Legierungen), Glas, Keramik oder Steingut.

Ob PEEK oder PEK eingesetzt wird oder gegebenenfalls eine Mischung aus beidem, hängt im Wesentlichen vom Verwendungszweck der Antihaftbeschichtung ab. Während PEEK einfacher zu verarbeiten ist, weist PEK eine höhere Hitzebeständigkeit auf.

In einer bevorzugten Ausführungsform weist die Antihaftbeschichtung mindestens 50 Gew.-% PEK und/oder PEEK in der ersten Schicht auf.

In einer weiteren bevorzugten Ausführungsform weist die erste Schicht der erfindungsgemäßen Antihaftbeschichtung mehr als 40 Gew.%, insbesondere mehr als 45 Gew. % eines Fluorpolymers auf.

In einer weiteren bevorzugten Ausführungsform beträgt der Anteil Additive an der Antihaftbeschichtung nicht mehr als 10 Gew. %. Die Additive umfassen vorzugsweise insbesondere ein oder mehrere Farbpigmente, insbesondere mit einem Anteil bezogen auf die Schicht von 1 bis 4 Gew.-%, insbesondere dann, wenn die Schicht die farbgebende Schicht bzw. eine der farbgebenden Schichten der Antihaftbeschichtung ist.

Darüber hinaus kommen als Additive anorganische Stoffe, insbesondere Glasfasern, Glasflakes, Kohlefasern, Kohle bzw. Graphit in Form von Partikeln, SiC, Al₂O₃, MoS₂ oder SO₂ oder Mischungen hiervon, vorzugsweise mit einem Anteil bezogen auf die Schicht von 2 bis 8 Gew.-%, in Betracht.

Der Reibungskoeffizient von PEEK bzw. PEK zu Stahl beträgt etwa 0.17. Der Reibungskoeffizient zu Stahl kann durch Zugabe von beispielsweise Graphit und/oder Molybdändisulfit in Gewichtsanteilen von weniger als 10 Gew. % auf 0,11 reduziert werden. Insbesondere dann genügt die erfindungsgemäße Antihaftbeschichtung auch tribologischen Aufgabenstellungen. Sie kann beispielsweise zur Beschichtung von Lagerflächen verwendet werden. Die Antihaftbeschichtung ist dabei als Mehrschichtsystem ausgebildet. Bei einem Mehrschichtsystem sollte dann auch mindestens die oberste Deckschicht, vorzugsweise aber alle Schichten, den Anforderungen an die Zusammensetzung der ersten Schicht genügen und mindestens die Deckschicht die reibungsmindernden Additive enthalten. Der besondere Vorteil besteht darin, dass derartig beschichtete Lagerflächen äußerst abriebfest und damit vergleichsweise verschleißbeständig sind. Die Antihaftbeschichtung eignet sich insbesondere zur Beschichtung von mechanisch und/oder thermisch stark beanspruchten Lagerflächen.

Auch organische Stoffe, insbesondere PPSO₂ oder Aramid, können als Additive verwendet werden, insbesondere mit einem Anteil bezogen auf die Schicht von 2 bis 8 Gew.-%.

Additive wie SiC, Al₂O₃, SiO₂ kommen in Betracht, um die Härte der Antihaftbeschichtung zu erhöhen. Insbesondere Kohlefasern und Glasfasern oder -flakes werden unter anderem dazu verwendet, um Spannungen in der Beschichtung aufzunehmen, die beim Abkühlen entstehen, d.h. beim Übergang aus dem gelförmigen oder flüssigen Zustand in den kristallinen Zustand. Die Länge von vorzugsweise verwendeten Kohle- oder Glasfasern beträgt vorzugsweise 50 bis 500 µm bei einem Durchmesser der Fasern von vorzugsweise 5 bis 20 µm. Durch die Fasern können Spannungsrisse in der Antihaftbeschichtung vermieden werden, die zur sogenannten Spannungsrisskorrosion führen können.

Um eine elektrisch leitfähige Antihaftbeschichtung zu erzeugen, können als Additive elektrisch leitfähige anorganische Fasern in der Antihaftbeschichtung enthalten sein, vorzugsweise mit einem Anteil von 5 bis 9 Gew. % bezogen auf die Schicht. Bei einem schichtbezogenen Anteil von 7 Gew. % lässt sich beispielsweise ein Oberflächenwiderstand von < 10⁶ Ω erzeugen.

Als Fluorpolymeranteil der ersten Schicht kommen die Fluorpolymere Polytetrafluorethylen (PTFE), Polyfluoralkoxylalkan (PFA), Tetrafluorethylen Perfluormethylvinylether (MFA) oder Tetrafluorethylen Hexafluorpropylen (FEP) oder eine Mischung hiervon in Betracht, wobei insbesondere PFA und FEP bevorzugt sind.

Die Korngrößen von PEEK bzw. PEK zur Herstellung der ersten Schicht liegen vorzugsweise zwischen 2 bis 100 µm. Die Korngrößen der Fluorpolymere liegen bei der Verwendung von Pulver vorzugsweise ebenfalls zwischen 2 bis 100 µm, bei der Verwendung von Dispersionen vorzugsweise zwischen 100 nm und 5 µm.

Die Antihaftbeschichtung ist mehrschichtig, wobei die auf die erste Schicht aufgebrachten Schichten die gleiche Zusammensetzung wie die erste Schicht aufweisen kann.

Die erste Schicht ist aber auch hervorragend als Primer für mehrschichtige Antihaftbeschichtungen geeignet, bei denen die an die erste Schicht angrenzende zweite Schicht mindestens ein Fluorpolymer enthält, aber frei von PEK oder PEEK ist. Bei solchen Antihaftbeschichtungen kann es bevorzugt sein, wenn die Beschichtung zweischichtig ist, so dass die zweite Schicht die oberste Schicht bildet.

In der Verwendung als Primer kann die erste Schicht vorzugsweise als Grundschicht für Dispersionsbeschichtungen aus Fluorpolymeren wie PTFE, PFA, MFA und/oder FEP benutzt werden. Ebenso ist sie zur Verwendung als Primer für Pulverbeschichtungen aus PFA, MFA und/oder FEP geeignet.

Die oben genannten bevorzugten Korngrößen der Fluorpolymere gelten sowohl für die Herstellung des Primers als auch für weitere, darüber liegende Schichten, die Fluorpolymere enthalten.

Die Dicke einer aus mehreren Schichten bestehenden erfindungsgemäßen Antihaftbeschichtung beträgt vorzugsweise bis zu 2.000 µm.

Insbesondere bei sogenannten Fluorpolymer Dickschichtsystemen, deren Dicke vorzugsweise 500 bis 2.000 µm beträgt, ist die erfindungsgemäße erste Schicht der Antihaftbeschichtung als Primer wegen ihrer Beständigkeit von ganz besonderem Vorteil. So ist der Primer bei der Herstellung der Beschichtung sehr intensiven Hitzebelastungszyklen ausgesetzt. Bei der Herstellung von Mehrschicht-Beschichtungssystemen werden wiederholt Schichten aufgebracht, die jeweils bei 330°C bis 420°C miteinander verschmolzen werden. Bevorzugte Temperaturbereiche sind für die PEEK bzw. PEK enthaltende(n) Schicht(en) 380°C bis 420°C (besonderes bevorzugte Temperatur bei etwa 400°C), und für weitere Fluorpolymerschichten 360°C bis 420°C. Bei Dickschichten von 2.000 µm geschieht dies bis zu 15 mal.

Das Aufbringen der ersten und aller weiteren Schichten kann beispielsweise in Form einer Dispersion, vorzugsweise auf ein nicht erhitztes Substrat, erfolgen. Die erste und alle weiteren Schichten können auch in Form eines Pulvers aufgetragen werden, wobei das zu beschichtende Teil dann auch heiß sein kann. Das pulverförmige Beschichtungsgemisch kann beispielsweise mit einer elektrostatischen Pulverpistole aufgebracht werden. Auch kann das sogenannte "hot-flocking" als Verfahren zum Aufbringen der Schicht(en) verwendet werden. Die erfindungsgemäße Antihaftbeschichtung ist insbesondere zur Beschichtung von Werkstücken mit einer zu beschichtenden Oberfläche (Substrat) aus einem metallischen Werkstoff, Glas, Keramik, Steingut oder Emaille besonders geeignet.

Mit der erfindungsgemäßen Beschichtung wird eine sehr harte Antihaftschicht zur Verfügung gestellt, die eine verbesserter Kratzbeständigkeit und eine deutliche bessere thermische Beständigkeit gegenüber anderen Fluorpolymerbeschichtungen aufweist. Die Beschichtung kann kurzfristig Einsatztemperaturen bis zu 340 °C oder sogar mehr standhalten. Sie weist auch darüber hinaus deutliche Vorteile gegenüber bekannten Antihaftbeschichtungen auf, so insbesondere auch eine verbesserte Korrosionsbeständigkeit, vor allem aufgrund einer besonderen Wasserdampfdichtigkeit. Auch ist die erfindungsgemäße Beschichtung chemisch sehr beständig und weist eine hohe Härte auf.

Die Erfindung wird anhand von Figuren, in denen bevorzugte Ausgestaltungen der Erfindung dargestellt sind, näher erläutert.

Es zeigen
- Fig. 1: einen skizzierten Schichtaufbau einer erfindungsgemäßen mehrschichtigen Antihaftbeschichtung mit unterschiedlichen Schichtzusammensetzungen;
- Fig. 2: einen skizzierten Schichtaufbau einer erfindungsgemäßen ein- bzw. mehrschichtigen Antihaftbeschichtung mit einheitlicher Schichtzusammensetzung; und
- Fig. 3: ein Schliffbild einer erfindungsgemäßen Antihaftbeschichtung.

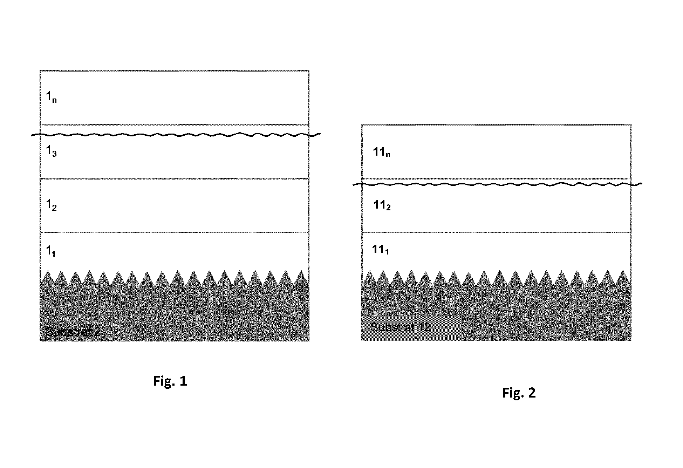

In Figur 1 zeigt eine Skizze einer Antihaftbeschichtung, die aus verschiedenen übereinander liegenden Schichten 1₁ bis 1ₙ besteht, auf einem metallischen Substrat 2. Die unterste Schicht 1₁ besteht aus einer erfindungsgemäßen Mischung aus PEEK und/oder PEK mit einem oder mehreren Fluorpolymeren, ausgewählt aus der Gruppe von PTFE, PFA, MFA und FEP. Die Schicht kann je nach Bedarf verschiedene Additive enthalten. Sie liegt unmittelbar auf dem metallischen Substrat auf und ist mit diesem fest verbunden. Die Schicht wird wahlweise als Dispersion oder als Pulver auf das Substrat aufgetragen und dann bei 360°C bis 420°C gesintert. Die resultierende Schichtdicke beträgt vorzugsweise 10 - 60 µm. Die erste Schicht dient als sogenannter Primer für die darüber liegenden Schichten.

Die darüber liegenden Schichten 1₂, 1₃, ..., 1ₙ (n vorzugsweise <=15) enthalten ebenso ein oder mehrere Fluorpolymere aus der vorgenannten Gruppe, sind aber frei von PEEK und PEK. Sie werden nacheinander auf die jeweils darunter liegende, vorzugsweise abgekühlte Schicht aufgetragen. Die Schichtdicke kann bis zu 2.000 µm betragen.

Die in Figur 2 skizzierte Antihaftbeschichtung unterscheidet sich zunächst von der zuvor beschriebenen Beschichtung darin, dass alle Schichten 11₁ bis 11ₙ PEK und/oder PEEK enthalten und den erfindungsgemäßen Kriterien für die Zusammensetzung der ersten Schicht entsprechen. Vorzugsweise ist die Zusammensetzung aller Schichten gleich. Die Schichtdicke der einzelnen Schichten kann vorzugsweise 10 bis 100 µm betragen. Die Anzahl n der Schichten ist vorzugsweise <= 10, die Schichtdicke vorzugsweise <= 400 µm.

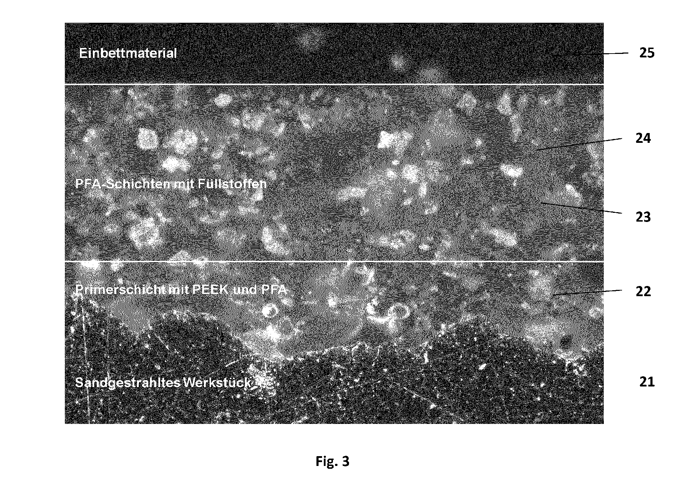

In Figur 3 ist ein Schliffbild eines erfindungsgemäßen Dreischicht-Beschichtungssystems auf einem sandgestrahlten Werkstück dargestellt. Die unterste, mit dem Werkstück 21 in unmittelbarem Kontakt stehende Schicht ist eine PEEK und PFA enthaltende Primerschicht 22. Darauf aufgebracht sind zwei Füllstoffe enthaltende PFA-Schichten 23, 24. Nach jedem Schichtauftrag wurde die aufgetragene Schicht mit der darunter liegenden versintert, so dass keine klaren Schichtgrenzen mehr erkennbar sind. Die gesamte Dicke der Antihaftbeschichtung beträgt etwa 100 µm. Oberhalb der beiden PFA- Schichten ist Einbettmaterial 25 zu erkennen, das nicht Bestandteil der Beschichtung ist, sondern zur Erzeugung eines sauberen Schliffbildes verwendet wurde.

### Beispiele:

Zur Verdeutlichung der Vorteile der Erfindung wurden Laugenbackbleche mit erfindungsgemäßen Beschichtungen sowie mit einer nicht erfindungsgemäßen Beschichtung beschichtet und miteinander verglichen. Vor dem Auftragen der Beschichtung wurden die zu beschichtenden Bleche entfettet und anschließend gesandstrahlt (z.B. mit Aluminiumkorund, FEPA 60 Korngröße 210 bis 297 um).

Die erfindungsgemäße Antihaftbeschichtung hat einen Dreischichtaufbau mit einer auf das Laugenbackblech aufgetragenen ersten Primerschicht und zwei darauf angeordneten, handelsüblichen PFA-Beschichtungen. Die Primerschicht wurde hergestellt aus einer Mischung von zwei Teilen einer PEEK-Dispersion und einem Teil einer PFA-Dispersion. Als PEEK-Dispersion wurde die unter der Bezeichnung Vicote^{®} F804 der Firma Victrex plc erhältliche Dispersion, als PFA-Dispersion die unter der Bezeichnung 857N-110 erhältliche Dispersion der Firma DuPont verwendet. Der Mischung wurden Farbpigmente zugesetzt. Die Mischung wurde auf das Laugenbackblech aufgetragen, dann für rund 5 Minuten an Luft getrocknet, für weitere 5 Minuten bei etwa 120°C im Ofen getrocknet und danach bei 380°C bis 420°C gesintert, bis die Beschichtung glatt und glänzend aussah. Die erzeugte Primerschicht enthielt dann 66 Gew. % PEEK, 33 Gew. % PFA und 1 % Füllstoffe (Pigmente).

Nachfolgend wurden zwei Deckschichten aus einer handelsüblichen PFA-Dispersion, die unter der Bezeichnung 857N-110 der Fa. DuPont erhältlich ist, aufgetragen und in gleicher Weise wie die Primerschicht getrocknet und gesintert.

Das Auftragen aller Schichten erfolgte durch Aufsprühen, wobei die Schichtdicke für die Primerschicht in einem Bereich von 20 - 40 µm lag und die Schichtdicke für die Deckschicht insgesamt in einem Bereich von 40 bis 60 µm.

Das Laugenbackblech wurde versuchsweise für die industrielle Laugenproduktion verwendet. Die Standzeit des Laugenbackblechs betrug mehr als drei Monate.

In gleicher Weise wurden weitere Laugenbackbleche mit einer erfindungsgemäßen Antihaftbeschichtung beschichtet, mit dem einzigen Unterschied, dass die Primerschicht von einigen der beschichteten Backbleche 57 Gew.% PEEK, 42 Gew. % PFA und 1 % Füllstoffe (Pigmente) und von den übrigen der beschichteten Backbleche 52 Gew.% PEEK, 47 Gew.% PFA und 1 % Füllstoffe (Pigmente) enthielt.

Dabei wurde festgestellt, dass die Standzeiten der Backbleche ansteigen, je höher der PFA-Anteil in der Primerschicht ist. Dies wurde darauf zurückgeführt, dass die Bindungsfestigkeit der Primerschicht mit den darüber liegenden Deckschichten aufgrund des höheren PFA-Anteils steigt.

Ein weiteres Laugenbackblech wurde mit einem Zweischicht-System einer üblichen Fluorpolymerbeschichtung beschichtet, bei dem die auf das Backblech aufgebrachte Schicht aus einer Dispersion der Bezeichnung 420N-703 von DuPont und die darauf aufgebrachte zweite Schicht aus einer PFA - Dispersion der Bezeichnung 858N-917 Ruby Red von DuPont hergestellt wurden. Die Sintertemperaturen und -dauern waren die gleichen wie die für die PFA-Schichten der erfindungsgemäßen Beschichtung, und die Gesamtschichtdicke betrug ca. 60 µm.

Auch dieses Laugenbackblech wurde versuchsweise für die industrielle Laugenproduktion verwendet. Die Standzeit des Blechs betrug sechs Wochen, danach kam es zu einer großflächigen Ablösung der Beschichtung wegen Korrosion des metallischen Backblechs. Offensichtlich war die Barrierewirkung der Beschichtung gegen einen Angriff durch die beim Backen verwendeten Laugen nicht ausreichend genug.

## Patentansprüche

1. Antihaftbeschichtung für ein Substrat aus einem metallischen Werkstoff, Glas, Keramik, Steingut oder Emaille, mit mindestens einer ersten, unmittelbar auf das Substrat aufgebrachte Schicht, die aus mindestens 33 Gew. % Polyetherketon (PEK) und/oder Polyetheretherketon (PEEK), mindestens 33 Gew. % eines oder mehrerer Fluorpolymere und nicht mehr als 16 % Gew. % Additiven besteht, und einer daran angrenzenden zweiten Schicht, wobei die mindestens eine zweite Schicht
- entweder mindestens ein Fluorpolymer enthält und frei von PEK oder PEEK ist,
- oder aus mindestens 33 Gew. % PEK und/oder (PEEK), mindestens 33 Gew. % eines oder mehrerer Fluorpolymere und nicht mehr als 16 % Gew. % Additiven besteht.

2. Antihaftbeschichtung nach Anspruch 1, **gekennzeichnet durch** mindestens 50 Gew. % PEK und/oder PEEK in der ersten Schicht.

3. Antihaftbeschichtung nach Anspruch 1 oder 2, **gekennzeichnet durch** mehr als 40 Gew.%, insbesondere mehr als 45 Gew. %, eines Fluorpolymers in der ersten Schicht.

4. Antihaftbeschichtung nach einem der Ansprüche 1 bis 3, **dadurch gekennzeichnet, dass** der Anteil Additive 10 Gew. % nicht übersteigt.

5. Antihaftbeschichtung nach einem der Ansprüche 1 bis 4, **dadurch gekennzeichnet, dass** die Additive ein oder mehrere Farbpigmente umfassen, insbesondere mit einem Anteil bezogen auf die Schicht von 1 bis 4 Gew. %.

6. Antihaftbeschichtung nach einem der Ansprüche 1 bis 5, **dadurch gekennzeichnet, dass** die Additive anorganische Stoffe aufweisen, insbesondere Glasfasern, Glasflakes, Kohlefasern, Kohle in Form von Partikeln, SiC, Al₂O₃ oder SiO₂ oder Mischungen hiervon, und insbesondere mit einem Anteil bezogen auf die Schicht von 2 bis 8 Gew. %.

7. Antihaftbeschichtung nach einem der Ansprüche 1 bis 6, **dadurch gekennzeichnet, dass** die Additive organische Stoffe aufweisen, insbesondere PPSO₂ oder Aramid, und insbesondere mit einem Anteil bezogen auf die Schicht von 2 bis 8 Gew. %.

8. Antihaftbeschichtung nach einem der Ansprüche 1 bis 7, **gekennzeichnet durch** elektrisch leitfähige anorganische Fasern, insbesondere mit einem Anteil von 5 bis 9 Gew. % bezogen auf die Schicht, vorzugsweise mit einem schichtbezogenen Anteil von 7 Gew. %.

9. Antihaftbeschichtung nach einem der Ansprüche 1 bis 8, **dadurch gekennzeichnet, dass** das Fluorpolymer PTFE, PFA, MFA oder FEP oder eine Mischung hiervon enthält.

10. Antihaftbeschichtung nach einem der Ansprüche 1 bis 9, **dadurch gekennzeichnet, dass** sie mehrschichtig ist, wobei die auf der ersten Schicht aufgebrachten Schichten die gleiche Zusammensetzung wie die erste Schicht aufweisen.

11. Antihaftbeschichtung nach einem der Ansprüche 1 bis 10, **dadurch gekennzeichnet, dass** die zweite Schicht mindestens ein Fluorpolymers enthält und frei von PEK oder PEEK ist, und dass sie die oberste Schicht der Antihaftbeschichtung ist.

12. Antihaftbeschichtung nach einem der Ansprüche 1 bis 11, **gekennzeichnet durch** eine Dicke der ersten Schicht von 5 bis 100 µm und/oder **durch** eine Gesamtschichtdicke von nicht mehr als 2.000 µm.

13. Werkstück mit einer Antihaftbeschichtung nach einem der vorstehenden Ansprüche, wobei das Substrat, auf dem die Antihaftbeschichtung aufgebracht ist, aus einem metallischen Werkstoff, Glas, Keramik, Steingut oder Emaille besteht.

## Claims

1. Non-stick coating for a substrate from a metallic material, glass, ceramic, stone ware or enamel, having at least one first layer applied directly to the substrate and consisting of at least 33 wt.% polyetherketone and/or polyetheretherketone (PEEK), at least 33 wt.% of one or more fluoropolymers and no more than 16 wt.% additives, and a second layer adjacent thereto, wherein the second layer
- either comprises at least one fluoropolymer and is free of PEK or PEEK,
- or consists of at least 33 wt.-% PEK and/or PEEK, at least 33 wt.-% of one or more fluoropolymers and not more than 16 wt.-% additives.

2. Non-stick coating according to claim 1, **characterised by** at least 50 wt.% PEK and/or PEEK in the first layer.

3. Non-stick coating according to claim 1 or 2, **characterised by** more than 40 wt.%, in particular more than 45 wt.%, of a fluoropolymer in the first layer.

4. Non-stick coating according to one of claims 1 to 3, **characterised in that** the proportion of additives does not exceed 10 wt.%.

5. Non-stick coating according to any of claims 1 to 4, **characterised in that** the additives comprise one or more colour pigments, in particular with a proportion of 1 to 4 wt.% in relation to the layer.

6. Non-stick coating according to any of claims 1 to 5, **characterised in that** the additives comprise inorganic substances, in particular glass fibres, glass flakes, carbon fibres, carbon in the form of particles, SiC, Al₂O₃ or SiO₂ or mixtures thereof, and in particular with a proportion of 2 to 8 wt.% in relation to the layer.

7. Non-stick coating according to any of claims 1 to 6, **characterised in that** the additives comprise organic substances, in particular PPSO₂ or aramide, and in particular in a proportion of 2 to 8 wt.% in relation to the layer.

8. Non-stick coating according to any of claims 1 to 7, **characterised by** electrically conductive inorganic fibres, in particular with a proportion of 5 to 9 wt.% in relation to the layer, preferably with a layer-related proportion of 7 wt.%.

9. Non-stick coating according to any of claims 1 to 8, **characterised in that** the fluoropolymer contains PTFE, PFA, MFA or FEP or a mixture thereof.

10. Non-stick coating according to any of claims 1 to 9, **characterised in that** it is multilayer, wherein the layers applied to the first layer have the same composition as the first layer.

11. Non-stick coating according to any of claims 1 to 10, **characterised in that** the second layer comprises at least one fluoropolymer, and that it is the top layer of the non-stick coating.

12. Non-stick coating according to any of claims 1 to 11, **characterised by** a first layer thickness of 5 to 100 µm and/or a total layer thickness of no more than 2000 µm.

13. Workpiece with a non-stick coating according to any of the preceding claims, wherein the substrate, onto which the non-stick coating is applied, consists of a metallic material, glass, ceramic, stone ware or enamel.

## Revendications

1. Revêtement antiadhérent pour un substrat constitué d'un matériau métallique, de verre, de céramique, de grès cérame ou d'émail, avec au moins une première couche apposée directement sur le substrat, qui est constituée d'au moins 33 % en poids de polyéthercétone (PEK) et/ou de polyétheréthercétone (PEEK), d'au moins 33 % en poids d'un ou plusieurs polymères fluorés et d'au plus 16 % en poids d'additifs, et avec une deuxième couche adjacente à la première, sachant que la deuxième couche au moins unique
- soit contient au moins un polymère fluoré et est exempte de PEK ou PEEK,
- soit est constituée d'au moins 33 % en poids de PEK et/ou de PEEK, d'au moins 33 % en poids d'un ou plusieurs polymères fluorés et d'au plus 16 % en poids d'additifs.

2. Revêtement antiadhérent selon la revendication 1, **caractérisé par** au moins 50 % en poids de PEK et/ou de PEEK dans la première couche.

3. Revêtement antiadhérent selon la revendication 1 ou 2, **caractérisé par** plus de 40 % en poids, en particulier plus de 45 % en poids, d'un polymère fluoré dans la première couche.

4. Revêtement antiadhérent selon l'une des revendications 1 à 3, **caractérisé en ce que** la proportion d'additifs ne dépasse pas 10 % en poids.

5. Revêtement antiadhérent selon l'une des revendications 1 à 4, **caractérisé en ce que** les additifs comprennent un ou plusieurs pigments colorants, en particulier dans une proportion de 1 à 4 % en poids, par rapport à la couche.

6. Revêtement antiadhérent selon l'une des revendications 1 à 5, **caractérisé en ce que** les additifs présentent des matières minérales, en particulier des fibres de verre, des flocons de verre, des fibres de carbone, du carbone sous forme de particules, du carbure de silicium (SiC), de l'alumine (Al₂O₃) ou du dioxyde de silicium (SiO₂), ou des mélanges de ces substances, et en particulier dans une proportion de 2 à 8 % en poids par rapport à la couche.

7. Revêtement antiadhérent selon l'une des revendications 1 à 6, **caractérisé en ce que** les additifs présentent des matières organiques, en particulier du polyphénylène sulfone (PPSO₂) ou de l'aramide, et en particulier dans une proportion de 2 à 8 % en poids par rapport à la couche.

8. Revêtement antiadhérent selon l'une des revendications 1 à 7, **caractérisé par** des fibres minérales électriquement conductrices, en particulier dans une proportion de 5 à 9 % en poids par rapport à la couche, de préférence dans une proportion de 7 % en poids par rapport à la couche.

9. Revêtement antiadhérent selon l'une des revendications 1 à 8, **caractérisé en ce que** le polymère fluoré contient du PTFE (polytétrafluoréthylène), du perfluoroalcoxy (PFA), du fluoroalcoxy modifié (MFA) ou du fluoroéthylène propylène (FEP), ou un mélange de ces substances.

10. Revêtement antiadhérent selon l'une des revendications 1 à 9, **caractérisé en ce qu'**il est à plusieurs couches, sachant que les couches apposées sur la première couche présentent la même composition que la première couche.

11. Revêtement antiadhérent selon l'une des revendications 1 à 10, **caractérisé en ce que** la deuxième couche contient au moins un polymère fluoré et est exempte de PEK ou de PEEK, et **en ce qu'**elle est la couche supérieure du revêtement antiadhérent.

12. Revêtement antiadhérent selon l'une des revendications 1 à 11, **caractérisé par** une épaisseur de la première couche de 5 à 100 µm et/ou par une épaisseur totale des couches d'au plus 2000 µm.

13. Pièce usinée pourvue d'un revêtement antiadhérent selon l'une des revendications précédentes, sachant que le substrat sur lequel est apposé le revêtement antiadhérent est constitué d'un matériau métallique, de verre, de céramique, de grès cérame ou d'émail.
